# EUROPEAN PATENT SPECIFICATION

(11) **EP 0 424 017 B1**
(45) Date of publication and mention of the grant of the patent: **24.05.1995**
(21) Application number: 90311085.6
(22) Date of filing: 10.10.1990
(51) Int. Cl.: G02F 1/015

(54) **Nonlinear optical device structure with compound semiconductor having graded chemical composition**
Nichtlineare optische Vorrichtung mit Verbindungshalbleiter dessen chemische Zusammensetzung abgestuft ist
Dispositif optique non linéaire à composé semi-conducteur à gradient de composition chimique

(30) Priority: 18.10.1989 US 423073
(43) Date of publication of application: 24.04.1991
(73) Proprietor: AT&T Corp., New York, NY 10013-2412 (US)
(72) Inventor: Capasso, Federico, Westfield, New Jersey 07090 (US); Ralph, Stephen Eugene, North Plainsfield, New Jersey 07060 (US)
(74) Representative: Watts, Christopher Malcolm Kelway, Dr.

(56) References cited:
- EP-A- 0 324 505
- J. APPL. PHYS., vol. 62, no. 8, 15th October 1987, pp. 3360-3365 ; T. HIROSHIMA et al.: "Quantum-confined Stark effect in graded-gap quantum wells"
- APPLIED PHYSICS LETTERS, vol. 55, no. 16, 16th October 1989, pp. 1597-1599 ; E. ROSENCHER et al.: "Observation of nonlinear optical rectification at 10.6 mum in compositionally asymmetrical A1GaAs multiquantum wells"
- ELECTRONICS LETTERS, vol. 25, no. 18, 31st August 1989, pp. 1212-1214 ; H. ANDO et al.: "Improvement of optical nonlinear response in GaAs/AlGaAs nipi-MQW structure with Au OHMIC contact"

## Description

### Technical Field

This invention relates to optical (lightwave) communication systems and more particularly to such systems that comprise nonlinear optical devices for controlling optical beams.

### Background of the Invention

In an optical communication system, optical processing or other optical system, it is often desired to have nonlinear optical device for modulating or switching a first (controlled) optical beam propagating through the device. Typically, such a device exhibits a variable absorption of the controlled beam, depending upon the intensity of a second (control) optical beam incident upon the device.

In addition to the aforementioned devices operating on the basis of optical absorption, there have been devices operating on the basis of the photo-refractive effect--i.e., variation of refractive index by the control beam, and hence phase modulation by the control beam. Some of these employ a single beam and some employ multiple beams to modify the refractive index of a nonlinear device structure with respect to the controlled beam--and hence to modify either the intensity or the phase of the controlled beam by the further use of known techniques. Those photo-refractive index modulation structures which employ the single beam require undesirably high power to yield commercially significant modifications of the controlled beam, and those structures which employ the two beams to modify refractive index are undesirable because of the complexity arising from the requirement of the two beams. By "refractive index" is meant the ratio of the phase velocity of an optical beam in vacuum to the speed of the beam in a material.

In Patent No. 4,546,244 issued to D. A. B. Miller on October 8, 1985, a nonlinear optical device structure, operating on the basis of optical absorption, was disclosed using a GaAs/AlGaAs multiple quantum well structure. That structure, however, requires that external electrical connections be attached to it. The need for such connections is undesirable in certain commercially important uses of such devices--for example, in crosspoint or other arrays. Also, in that structure the speed of operation (maximum repetition rate) is limited by charge carrier recombination time. Therefore it would be desirable to have a nonlinear optical device structure which does not require external electrical connections and whose speed is not limited by charge carrier recombination time.

Furthermore, graded-gap quantum wells are theoretically discussed in the paper of T. Hiroshima et al. in J. Appl. Phys. 62(8), 1987, pp. 3360-3365.

### Summary of the Invention

The undesirable need for external electrical connections to a nonlinearoptical device structure can be avoided by using an optical control device as defined in claim 1 comprising a compound semiconductor device structure having a spatially varying chemical composition such that the energy band diagram for the structure has a conduction and edge and a valence band edge which respectively propel electrons and holes in the same direction but with different average speeds, so that when a second (control) light beam is directed upon the structure, electron-hole pairs are created which temporarily modify an optical property--such as optical birefringence or absorption--of the structure with respect to a first (controlled) light beam. The structure requires no attachment of any electrodes or external connections.

It is believed that the modification of the optical property of the device structure is produced by an average spatial separation of electrons from holes occurring just after the electron-hole pairs created by the control beam, and that this separation of electrons from holes induces an electric dipole moment in the structure, and that the electric field of this dipole in turn induces the modification of the optical property. Moreover, this modification of the optical property disappears when the average separation of electrons from holes disappears, as by virtue of their drifting to positions where they are no longer spatially separated. It should be understood, however, that the success of this invention does not necessarily depend upon the correctness of this theory, and that one embodiment of the invention has already been successfully experimentally tested.

Advantageously, the energy band edge diagram of the structure has at least one quantum well for electrons and one quantum well for holes located at the same position in the structure--in order to supply a well-defined location for electrons and holes to end their separation and hence to enhance the attainable repetition rate.

### Brief Description of the Drawing

The invention, together with its features, advantages, and characteristics, can be better understood when read in conjunction with the drawings in which;
FIG. 1 is a perspective diagram of an optical switching system including an optical control device in accordance with a specific embodiment of the invention
FIG. 2 is an energy band edge diagram of the optical control device shown in FIG. 1;
FIG. 3 is an energy band edge diagram of another control device useful in the system shown in FIG. 1, in accordance with another specific embodiment of the invention; and
FIGS. 4-6 are energy band edge diagrams that are useful in explaining the principles of operation of the invention.

Only for the sake of clarity none of the drawings is to scale.

### Detailed Description

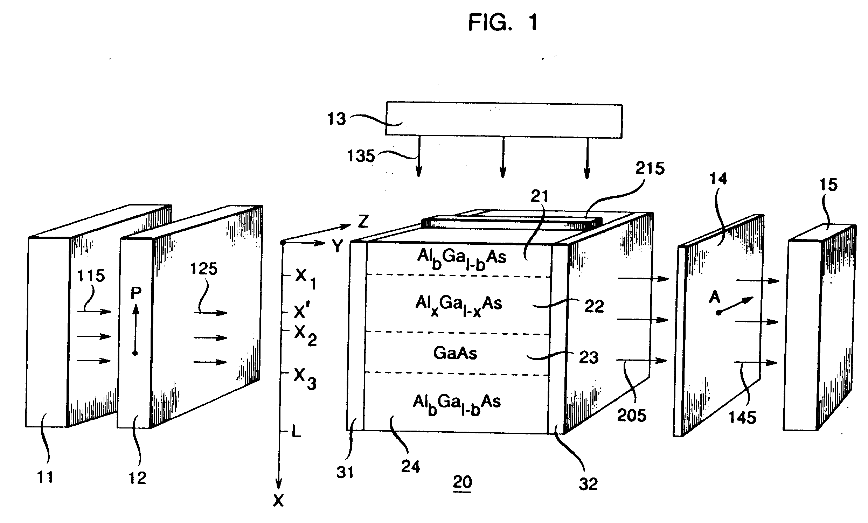

As shown in FIG. 1, an optical source 11 supplies an optical (light) beam 115 to be controlled by a device structure 20, the structure of which is described in greater detail below. The source 11 typically is a laser. The beam 115 is directed upon an optical polarizer 12 (with polarization direction indicated by arrow P) located at a front end of the control device 20. After the beam 115 passes through the polarizer 12, it emerges as a polarized optical beam 125. This beam 125 is incident upon and propagates through the device 20 and emerges therefrom as beam 205. This beam 205 is then incident upon an optical analyzer 14 (with polarization direction indicated by arrow A) and emerges therefrom as beam 145. This beam 145 is then incident upon utilization means 15 for processing the beam 145. Typically arrows P and A are perpendicular to each other, and the utilization means 15 comprises opto-electronic circuitry for receiving and processing the beam 145. Propagation of the beam 125 through the device 20 is controlled by another optical source 13, typically a pulsed (flashing) laser, which emits a control optical (light) beam 135. This optical beam 135 is incident upon the control device 20 where it creates electron-hole pairs and thereby controls propagation of the beam 125 therethrough, as described and explained in further detail below.

The control device 20 includes a region 21, extending from X = 0 to X = X₁, composed of Al_{b}Ga_{1-b}As, typically with b=0.5; a ("graded") region 22 extending from X = X₁ to X = X₂, composed of AlₓGa₁₋ₓAs with the mole fraction x of aluminum typically going from x=0.40 at X=X₁, to x = 0.10 at X=X₂; a region 23 extending from X = X₂ to X = X₃ composed of GaAs; and a region 24, extending from X=X₃ to X=L, composed typically again of Al_{b}Ga_{1-b}As. It should be understood that these mole fractions b and x are approximate. No intentional doping with any impurities is required in any of these regions, which can be grown by conventional methods, such as molecular beam epitaxy, typically upon an <001>; oriented semi-insulating GaAs substrate (not shown), located on the top (or bottom) of the structure 20. On the other hand, doping of the region 22 may affect the repetition rate of the device, by changing either the rise time, the fall time, or both.

Window layers 31 and 32, serve as anti-reflection coatings, as known in the art, and are optional.

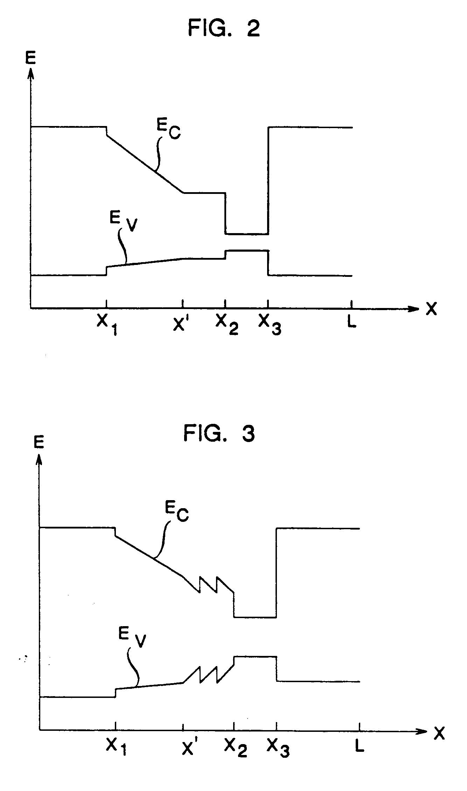

Typically the mole fraction x in region 22 varies linearly with distance X, except for an advantageous (though optional) distance ( X′X₂ ) located just to the left of X=X₂ to supply a region ( X′X₂ ) of constant bandgap energy, as indicated in FIG. 2.

Typically, X′-X₁ =0.5 to 1.0 »m; X₂-X′=0.0 to 0.2 »m. The width of region 23 ( X₃-X₂ ) is advantageously at least as much as will accommodate one bound electron state, typically about 4 nanometers or more. To maximize coupling efficiency and depth of modulation, the cross section of the beam 125 is focused and confined to the regions 22 and 23. Moreover, for the purpose of establishing a suitable waveguide propagation mode, the region 21 is locally thickened with a rib region 215, as known in the art.

The source 11 of the controlled beam is advantageously a laser whose output beam 115 has a wavelength corresponding to photons whose energies are nearly equal to, but are less than, the lowest optical transitions in the structure, that is, the transitions in the region X′X₂ or X₂ X₃. Typically this source 11 is a semiconductor which emits light having a wavelength in the approximate range 0.70 to 1.55 »m. The source 13 is typically either another semiconductor laser or a dye laser. The wavelength of the beam 135 is such that the beam 135 is absorbed in region 22 (to create electron-hole pairs) but is not absorbed in region 21: Optimally, each photon of the beam 135 has an energy as close as possible, but not exceeding the bandgap energy (E_{c} - Eᵥ) in the region 21, but in any event, the energy of each such photon should exceed the bandgap energy the region 23. Advantageously, in the Z direction the cross section of the beam 135 is greater than that of the rib region 215.

As shown in FIG. 2, in the region 22 a crucial feature of the conduction band edge E_{c} as compared with the valence band edge Eᵥ is that the magnitude of the slope (the gradient) of E_{c} divided by the effective mass of an electron is greater than the slope of Eᵥ divided by the effective mass of a hole, so that the magnitude of the drift velocity of an electron is greater than that of a hole. Note that the direction of the force on an electron is the same as that on a hole an electron and a hole having charges of opposite sign, the respective band edges E_{c} and Eᵥ having slopes of opposite signs, and the force on an electron and on a hole being the product of charge and (negative) slope. The average speed of electrons drifting to their potential wells is thus greater than that of holes--whereby a spatial separation of electrons from holes, and hence an electrical dipole moment, is temporarily created in the device structure 20, as explained further in greater detail below.

Consequently, when the source 13 flashes the beam 135 onto the structure 20, electron-hole pairs are created in the structure 20. The electrons in these pairs are propelled with higher average speed to their potential wells than are the holes. Therefore, an electrical dipole moment is induced temporarily in the device 20. This dipole moment temporarily changes an optical property of the structure 20, such as its birefringence, or its absorption, or both, with respect to the beam 125. As known in the art, temporary changes in the birefringence of the structure 20 can be used to induce temporary changes in the intensity of the beam 145 incident upon the utilization means 15, by virtue of the polarizer 12 and the analyzer 14, as is desired in an optical switch or modulator.

There is inherently a change in index of refraction associated with the change in birefringence in response to the beam 135; therefore, in response to the beam 135, there will also be a change in phase delay (phase shift) induced in the controlled beam propagating through the device 20. Thus the system shown in FIG. 1 can be used in conjunction with optical systems operating on the basis of phase modulation in addition to the above described intensity modulation. In optical systems in which such phase modulation--such as phase shift keying--rather than intensity modulation is to be used, the polarizer 12 and analyzer 14 can optionally be removed.

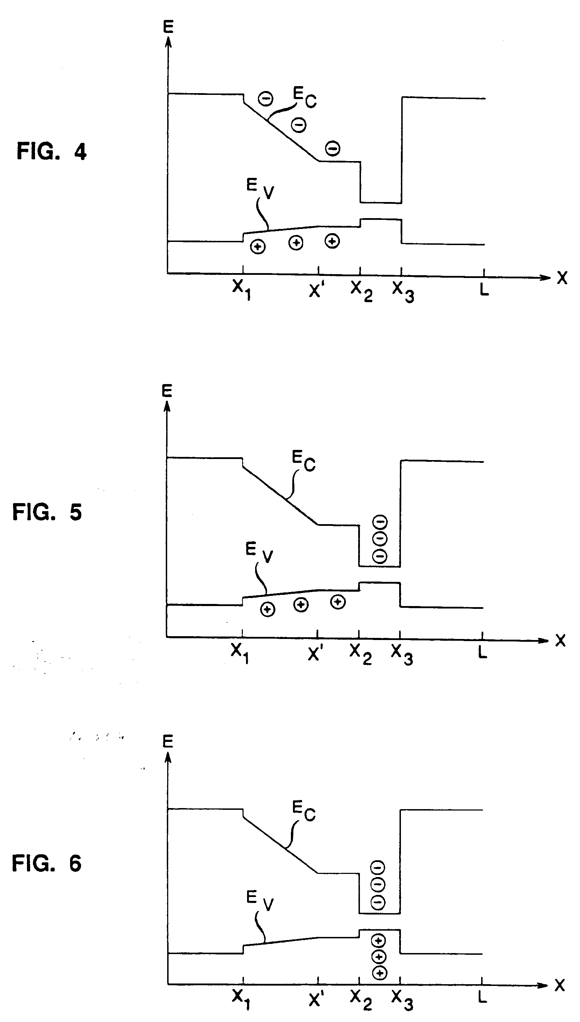

The above described dipole moment creation can be better understood with reference to FIGS. 4-6. As shown in FIG. 4, the beam 135 is suddenly directed upon the device 20, whereby electron-hole pairs are lately formed therein. Under the influence of the respective fields produced by the electron and hole energy band edges E_{c} and Eᵥ as indicated in FIG.5, the electrons and holes drift toward thee quantum potential well located at X₂X₃, but with different average speeds, whereby the electrons arrive at, and are captured by, the well at a time when the holes have not yet done so. Accordingly, a spatial separation of electrons and holes occurs, and hence an electric dipole moment in the X direction is temporarily induced in the structure 20. Finally, the holes arrive at, and are captured by, their well, as indicated in FIG. 6, whereby the dipole moment is extinguished, whereby the device structure is ready for repeat performance of dipole induction by means of a fresh beam 135 (with or without an intervening recombination of electrons and holes). It should be understood that while the quantum wells facilitate larger separation of electrons and holes hence serve to increase induced dipole moment, they are not essential, and therefore the region 23 can be omitted. That is, the region 22 can be contiguous with the region 24.

The above described induced dipole can thus be used to control the beam 115 by inducing the property of birefringence with respect to the beam 115. The region X′X₂, where E_{c}-Eᵥ is constant, provides an extended region having a constant value of increased birefringence, which is advantageous though not essential. That is, it is possible to make X′X₂ equal to zero.

Based upon preliminary experiments with a device structure similar to the structure 20, for a beam 115 of wavelength equal to about 1.06 »m and a beam 135 of wavelength equal to about 0.60 »m and having a fluence equal to about 20 fJ/ »m², a repetition rate as fast as 10 GHz (100 picosecond) is expected. By a "similar structure" it is meant that the structure comprised regions 22,23,24 in a repeated spatial sequence. However, it is believed that such sequenced structures are not necessarily preferred. Thus far with non-optimized devices, a modulation of one part in ten thousand has been attained.

For maximum modulation effect, the polarizer 12 has its polarization P oriented at an angle of 45° with respect to the optically induced birefringent axes of the structure 20.

As shown in FIG. 3, the energy diagram of the device structure 20 can be modified to yield a multiple quantum well structure, in order to provide a nonlinear device adapted specifically for operating by absorption. That is, the polarizer 12 and the analyzer 14 can be removed while the structure 20 directly modulates the intensity of the controlled beam. Here, as before, the beam 135 creates electron-hole pairs in which the electrons drift faster than the holes to their quantum well located in the region 23 (X₂ X₃), whereby a dipole moment is induced. In turn, the electric field of this dipole shifts the energy level(s) in the multiple quantum wells located in the region 22 (X′ X₂), which shifts absorption edge of the (modified) device 20 with respect to the beam 115--by way of the quantum Stark effect. Thus, if this shift of absorption edge is sufficient, it can cause absorption of the beam 115 in response to the beam 135. Typically the number of wells located in region 22 in the structure is about ten (rather than the mere two wells shown in FIG. 3 for convenient illustrative purposes), but one or two wells may be useful. In this way, after the electrons (but not the holes) have drifted to their quantum well, as indicated in FIG.5, a relatively large number of electrons will be found in the well located in the region 23 (X₂ X₃), whereby the energy levels in the multiple wells located in the region X′ X₂ are shifted (quantum Stark effect), and hence the optical absorption is modified.

Although the invention has been described in detail with respect to specific embodiments, various modifications can be made without departing from the scope of the invention. For example, a quarter-wave plate can be inserted between the polarizer 12 and the structure 20. Also various other orientations of the optical beams can be used: for example, the beam 135 can be directed in the Z direction (perpendicular to the plane of the drawing).

## Claims

1. An optical control system comprising
(a) a compound semiconductor device structure (20);
(b) a source (11) of a first light beam (125) incident upon the structure, and
(c) a source (13) of a second light beam(135);
wherein an optical property of the structure with respect to the first beam (125) can be modified by the second beam ; characterized in that said structure has a spatially varying bandgap such that the energy band diagram for the structure has a conduction band edge and a valence edge which propel electrons and holes, respectively, in the same direction but with different average speeds.

2. An optical control system according to claim 1 in which the optical property is either birefringence or phase delay.

3. An optical control system according to claim 1 in which the optical property is absorption.

4. An optical system in accordance with claim 1 in which the conduction band edge has at least one quantum well for electrons and the valence band edge has at least one quantum well for holes which is located at the same position as the quantum well for electrons.

5. An optical control system in accordance with claim 4 in which the conduction band edge has a plurality of quantum wells for electrons and a plurality of quantum wells for holes which are respectively located at the same positions as those of the quantum wells for electrons.

6. An optical control device structure according to claim 5 in which the optical property is absorption.

7. An optical control system according to claim 6 further including means for utilizing the first beam after it propagates through the device structure.

8. An optical control system in accordance with claim 2 further including utilization means for utilizing the first beam after it propagates through the semiconductor device structure and further comprising an optical polarizer and an optical analyzer respectively located between the source of the first beam and the semiconductor device structure and between the semiconductor device structure and the utilization means.

9. An optical control system according to claim 1 in which no electrodes or external electrical connections are attached to the device structure.

10. An optical control system according to claim 9 further including means for utilizing the first beam after it propagates through the device structure.

## Patentansprüche

1. Optisches Steuersystem umfassend
a) eine Verbindungshalbleiteranordnung (20),
b) eine Quelle (11) eines ersten Lichtstrahls (125), der auf die Anordnung einfällt, und
c) eine Quelle (13) eines zweiten Lichtstrahls (135), in welchem eine optische Eigenschaft der Anordnung in Bezug auf den ersten Strahl (125) durch den zweiten Strahl geändert werden kann,
dadurch gekennzeichnet, daß die Anordnung eine sich räumlich ändernde Bandlücke hat, so daß die Energiebanddarstellung für die Anordnung eine Leitungsbandkante und eine Valenzbandkante aufweist, welche die Elektronen und Löcher jeweils in der gleichen Richtung, jedoch mit verschiedenen mittleren Geschwindigkeiten antreibt.

2. Optisches Steuerungssystem nach Anspruch 1,
in welchem die optische Eigenschaft entweder Doppelbrechung oder Phasenverzögerung ist.

3. Optisches Steuerungssystem nach Anspruch 1,
in welchem die optische Eigenschaft Absorption ist.

4. Optisches System nach Anspruch 1,
in welchem die Leitungsbandkante wenigstens einen Quantentrog für Elektronen und die Valenzbandkante wenigstens einen Quantentrog für Löcher hat, der an derselben Position wie der Quantentrog für Elektronen angeordnet ist.

5. Optisches Steuerungssystem nach Anspruch 4,
in welchem die Leitungsbandkante eine Vielzahl von Quantentrögen für Elektronen und eine Vielzahl von Quantentrögen für Löcher hat, die jeweils an denselben Positionen wie die Quantentröge für Elektronen angeordnet sind.

6. Optische Steuerungsanordnung nach Anspruch 5,
in welcher die optische Eigenschaft Absorption ist.

7. Optisches Steuerungssystem nach Anspruch 6,
ferner umfassend eine Einrichtung zur Verwendung des ersten Strahls, nachdem dieser durch die Anordnung getreten ist.

8. Optisches Steuerungssystem nach Anspruch 2,
ferner umfassend eine Benutzereinrichtung zum Verwenden des ersten Strahls, nachdem dieser durch die Halbleiteranordnung getreten ist, und
ferner umfassend einen optischen Polarisator und einen optischen Analysator, die jeweils zwischen der Quelle des ersten Strahls und der Halbleiteranordnung und zwischen der Halbleiteranordnung und der Benutzereinrichtung angeordnet sind.

9. Optisches Steuerungssystem nach Anspruch 1,
in welchem keine Elektroden oder externen elektrischen Verbindungen an der Anordnung befestigt sind.

10. Optisches Steuerungssystem nach Anspruch 9,
ferner umfassend eine Einrichtung zur Verwendung des ersten Strahls, nachdem dieser durch die Anordnung getreten ist.

## Revendications

1. Système de commande optique comprenant
(a) une structure de dispositif semiconducteur composé (20);
(b) une source (11) d'un premier faisceau lumineux (125) frappant la structure, et
(c) une source (13) d'un second faisceau lumineux (135);
dans lequel une propriété optique de la structure concernant le premier faisceau (125) peut être modifiée par le second faisceau; caractérisé en ce que ladite structure a une bande interdite variant spatialement de sorte que le diagramme de bande d'énergie de la structure a un bord de bande de conduction et un bord de valence qui propulsent des électrons et trous, respectivement, dans la même direction mais à des vitesses moyennes différentes;

2. Système de commande optique selon la revendication 1, dans lequel la propriété optique est soit la biréfringence soit le retard de phase.

3. Système de commande optique selon la revendication 1, dans lequel la propriété optique est l'absorption.

4. Système optique selon la revendication 1, dans lequel le bord de bande de conduction a au moins un puits quantique pour les électrons et le bord de bande de valence a au moins un puits quantique pour les trous qui est situé au même endroit que le puits quantique pour les électrons.

5. Système de commande optique selon la revendication 4, dans lequel le bord de bande de conduction a une pluralité de puits quantiques pour les électrons et une pluralité de puits quantiques pour les trous qui sont respectivement situés aux mêmes endroits que ceux des puits quantiques pour les électrons.

6. Système de commande optique selon la revendication 5, dans lequel la propriété optique est l'absorption.

7. Système de commande optique selon la revendication 6, comportant en outre un moyen pour utiliser le premier faisceau après qu'il se soit propagé à travers la structure du dispositif.

8. Système de commande optique selon la revendication 2, comportant en outre un moyen d'utilisation pour utiliser le premier faisceau après qu'il se soit propagé à travers la structure du dispositif et comprenant en outre un polariseur optique et un analyseur optique respectivement situés entre la source du premier faisceau et la structure du dispositif semiconducteur et entre la structure du dispositif semiconducteur et le moyen d'utilisation.

9. Système de commande optique selon la revendication 1, dans lequel aucune électrode ou aucune connexion électrique externe n'est attachée à la structure du dispositif.

10. Système de commande optique selon la revendication 9, comportant en outre un moyen pour utiliser le premier faisceau après qu'il se soit propagé à travers la structure du dispositif.
